Europäisches Patentamt

European Patent Office

Office européen des brevets

(19)

(11) **EP 0 636 341 B1**

(12) **FASCICULE DE BREVET EUROPEEN**

(45) Date de publication et mention
de la délivrance du brevet:
**09.04.1997 Bulletin 1997/15**

(51) Int. Cl.⁶: **A47L 9/28**

(21) Numéro de dépôt: **94202166.8**

(22) Date de dépôt: **25.07.1994**

(54) **Aspirateur avec des moyens de détection des sols et de réglage de la puissance du moteur en fonction du sol détecté**

Staubsauger mit Vorrichtung zur Erkennung des Bodens und Motorsteuerung in Abhängigkeit davon

Suction cleaner having floor nature detecting means accordingly regulating motor power

(84) Etats contractants désignés:
**DE DK FR GB IT NL SE**

(30) Priorité: **28.07.1993 FR 9309277**

(43) Date de publication de la demande:
**01.02.1995 Bulletin 1995/05**

(73) Titulaires:
 • **LABORATOIRES D'ELECTRONIQUE PHILIPS S.A.S.**
 **94450 Limeil-Brévannes (FR)**
 Etats contractants désignés:
 **FR**
 • **PHILIPS ELECTRONICS N.V.**
 **5621 BA Eindhoven (NL)**
 Etats contractants désignés:
 **DE DK GB IT NL SE**

(72) Inventeurs:
 • **Delmas, Gilles**
 **F-75008 Paris (FR)**
 • **Driessen, Hans**
 **F-75008 Paris (FR)**

(74) Mandataire: **Lottin, Claudine**
 **Société Civile S.P.I.D.**
 **156, Boulevard Haussmann**
 **75008 Paris (FR)**

(56) Documents cités:
 **EP-A- 0 379 680          EP-A- 0 479 609**
 **EP-A- 0 527 567**

 • **PATENT ABSTRACTS OF JAPAN vol. 16, no. 524 (C-1000) 28 Octobre 1992 & JP-A-04 197 327**
 • **PATENT ABSTRACTS OF JAPAN vol. 15, no. 429 (C-0880) 31 Octobre 1991 & JP-A-03 178 624**
 • **PATENT ABSTRACTS OF JAPAN vol. 14, no. 134 (C-0701) 14 Mars 1990 & JP-A-02 007 928**
 • **PATENT ABSTRACTS OF JAPAN vol. 15, no. 31 (C-0798) 24 Janvier 1991 & JP-A-02 268 718**
 • **PATENT ABSTRACTS OF JAPAN vol. 17, no. 429 (C-1095) 10 Août 1993 & JP-A-05 095 878**
 • **PATENT ABSTRACTS OF JAPAN vol. 16, no. 383 (C-0974) 17 Août 1992 & JP-A-04 122 340**

## Description

L'invention concerne un aspirateur comprenant un corps d'aspirateur muni d'une entrée d'air et d'une sortie d'air, et un tuyau muni d'une buse couplé à l'entrée d'air du corps d'aspirateur, ce corps d'aspirateur incluant une chambre à poussière communiquant avec l'entrée d'air, et un logement pour un ventilateur entraîné par un moteur électrique, dit moteur principal, ce logement communiquant avec la chambre à poussière et la sortie d'air, cet aspirateur comprenant en outre :

- des moyens de détection de caractéristiques de la nature du sol nettoyé,
- des moyens de classification des sols nettoyés, en fonction des caractéristiques détectées,
- des moyens de consigne pour déterminer une consigne de pression d'aspiration en fonction du sol classifié,
- des moyens de réglage de la puissance du moteur principal pour maintenir cette consigne de pression.

L'invention trouve son application dans le domaine de fabrication d'aspirateurs domestiques ou industriels.

Un aspirateur muni des éléments décrits plus haut est connu de la demande de brevet européen EP 0 467 347. Le document décrit un aspirateur ayant des moyens pour régler la puissance du moteur d'entraînement du ventilateur en fonction de la nature ou de l'état de surface du sol frotté par la buse. Ces moyens comprennent :

- un premier capteur, qui est un capteur de courant, pour détecter les changements du courant d'alimentation d'une brosse électrique placée dans la buse, qui apparaissent au moment précis du passage d'un sol à un autre sol, par exemple lors des changements de sols entre tapis épais, tapis fin, tatami et sol dur, et un circuit pour mémoriser les pics de courant. En effet pendant l'opération de nettoyage, l'utilisateur de l'aspirateur effectue avec la brosse située dans la buse, des allers et retours en frottant le sol. Selon l'état de surface de ce dernier, la charge appliquée à la brosse change, et donc son courant change. Ce courant présente la forme d'une sinusoïde ayant pour fréquence celle de la tension d'alimentation alternative du moteur de la brosse, fournie par le secteur. Ce courant présente d'autre part des variations en forme de pics de l'enveloppe de la courbe sinusoïdale, cette enveloppe étant par ailleurs symétrique par rapport au zéro de courant. Ces pics d'amplitude de la sinusoïde apparaissent à chaque changement de direction dans le frottement du sol par la brosse, c'est-à-dire entre un aller, où la brosse est poussée sur le sol, et un retour, où la brosse est tirée sur le sol. Il est important de remarquer que entre ces pics, la valeur du courant représentée par l'amplitude de la sinusoide est à peu près constante quel que soit le sol. La valeur du courant varie seulement lorsque les pics apparaissent et de telle manière que l'amplitude de ces pics est plus grande pour les tapis épais que pour les tapis fins, et est la plus petite pour les sols durs. Lorsque la brosse ne touche pas le sol, aucun pic n'apparaît :

- un second capteur, qui est un capteur de pression, formé d'un capteur piézoélectrique disposé dans le corps de l'aspirateur relié à un tuyau pour détecter la pression d'air à la partie succion du ventilateur, entre la chambre à poussière et la face succion de ce ventilateur, pour fournir un signal fonction de cette pression.

L'aspirateur connu du document cité comprend en outre :

- des moyens de calculs pour fournir un signal de classification de l'état de surface des sols, entre TAPIS EPAIS, TAPIS MINCE, TATAMI, et SOL DUR, à partir des pics de courant de la brosse électrique de base. Ces moyens de calcul incluent un microprocesseur qui compare les valeurs retenues des pics de courant avec des valeurs de courant de référence prédéterminées et prémémorisées. A partir de là, ce microprocesseur établit la classification des sols par comparaison avec ces valeurs de courant de référence. D'autre part, ce microprocesseur compare les valeurs de pression moyenne fournies par le second capteur, avec des valeurs de référence de pression prédéterminées et prémémorisées correspondant aux différents sols possibles. Ce microprocesseur fournit ensuite un signal de réglage de la puissance du moteur pour obtenir, en sortie de la chambre à poussière, une valeur de pression conforme à la valeur de pression prédéterminée et prémémorisée correspondant à la classe du sol calculée. Le microprocesseur peut aussi fournir éventuellement un signal interrupteur du moteur de brosse.

Cet aspirateur connu présente un inconvénient du fait que le détecteur de sol est un détecteur de courant lié à la brosse électrique de buse. Ainsi, la détection des pics, permettant l'indication des différents sols, ne peut être faite que lorsqu'une brosse est systématiquement utilisée dans la buse, c'est-à-dire lorsqu'une brosse est à la fois présente et en rotation. Or l'utilisation systématique d'une brosse n'est pas pratique. En particulier, la brosse électrique a tendance à éparpiller les miettes au lieu de les attirer vers la buse lorque le sol est un revêtement lisse ou un tapis ras. En général, l'utilisateur désire que la brosse soit hors service pour les sols lisses et les tapis ras. Donc, le dispositif décrit n'est utile que pour distinguer les tapis épais des tapis moyens, et dans ce cas, il apparaît que les niveaux des pics de courant ne sont pas très différents, ce qui rend cette distinction difficile.

La présente invention a pour but de fournir un aspirateur qui permet d'obtenir une classification des sols nettoyés, indépendante de la mise en service de la brosse.

La présente invention a aussi pour but de fournir un aspirateur dont le réglage de la puissance du moteur en fonction du sol détecté et classifié, est automatique.

Selon l'invention ce but est atteint, au moyen d'un aspirateur muni des éléments décrits dans le préambule et caractérisé en ce que :

- les moyens de détection sont constitués par un seul capteur de pression dont le point de mesure est appliqué à l'entrée de la chambre à poussière et qui fournit un signal présentant des variations caractéristiques de la nature du sol nettoyé,
- les moyens de classification comprennent un réseau de neurones pour la reconnaissance et le classement des sols nettoyés,

cet aspirateur comprenant également :

- un système de commande séquentielle, pour activer, dans un ordre approprié, et automatiquement, les moyens de détection, de classification, de consigne, et de réglage du moteur pincipal, pendant des durées de temps appropriées.

Cet aspirateur présente l'avantage que la détection des sols est très bonne car elle résulte d'un capteur dont la mesure est directement influencée par l'action du sol sur le flux d'air dans la buse et le tuyau. En effet, comme le point de mesure du capteur de pression servant de capteur de sol est placé à l'avant de la chambre à poussière, la mesure sur laquelle est fondée la classification des sols ne subit pas l'effet d'amortissement éventuel.

En outre, cet aspirateur présente l'avantage que la détection ne dépend pas de la mise en service obligatoire de la brosse électrique située dans la buse. Donc la détection peut être faite pour tous les sols, même les sols durs nettoyés sans brosse.

Par ailleurs, cet aspirateur présente l'avantage d'une meilleure résistance à l'usure que le dispositif connu, du fait que la détection n'est pas liée au moteur de brosse, car d'une manière générale le moteur de brosse de la buse a une moins grande longévité que le moteur principal de l'aspirateur.

De plus, cet aspirateur présente l'avantage que la détection des sols et le réglage de la puissance d'aspiration en retour sont réalisés de manière très rapides.

La présente invention a aussi pour but l'amélioration du nettoyage de chaque sol par l'optimisation de la détermination de la valeur de consigne de la pression d'aspiration.

Cet aspirateur présente de très nombreux avantages :

- d'abord le réglage de la pression d'aspiration est grandement amélioré, car cette pression est réglée directement à l'entrée de la chambre à poussière, au lieu de l'être à la sortie comme dans l'aspirateur connu. Donc le réglage de pression est plus précis et plus adéquat que dans l'aspirateur connu ; ainsi, par exemple, pour une pression de consigne donnée, lorsque le remplissage du sac varie, la puissance demandée au moteur varie en conséquence. Donc la pression à l'entrée de la chambre à poussière est toujours optimale ;
- ensuite, à la fois la détection de sol et le réglage de la pression convenable d'aspiration en fonction du sol détecté sont réalisés au moyen d'un seul et unique capteur. Donc, selon l'invention, non seulement la détection est plus précise, le réglage de la pression de travail est plus précis, mais encore ces résultats sont atteints avec une grande économie de moyens. On rappelle que dans l'aspirateur connu, le capteur de courant intervenait seulement dans la détection de sol, et le capteur de pression situé en sortie de la-chambre A poussière intervenait seulement dans le réglage de la pression de travail, ce réglage se faisant donc en sortie de la chambre à poussière. Deux capteurs étaient alors indispensables pour remplir les deux fonctions et cependant le réglage ne se faisait pas de façon appropriée. L'aspirateur selon l'invention réalise ces deux fonctions avec un seul capteur au lieu de deux, et en outre le réglage de la pression est grandement optimisé ;
- Si le tuyau d'aspirateur se trouve obstrué par un papier ou un chiffon par exemple, le moteur d'aspirateur qui dans ce cas n'est plus refroidi correctement par manque de ventilation, ne risque cependant pas de surchauffe, car dans ce cas une surpression est détectée, et la puissance du moteur est diminuée dans le but d'imposer la pression de consigne à l'entrée ; cette pression de consigne étant obligatoirement plus faible que la surpression accidentelle.

Cet aspirateur présente en outre l'avantage que ce sont maintenant les coefficients du réseau de neurone qui permettent d'opérer le classement des sols en fonction du signal du capteur de sol, et non plus, la comparaison avec des valeurs tabulées prémémorisées. Il en résulte que l'on peut s'affranchir ainsi des erreurs dues aux dispersions des caractéristiques dans toutes les parties de l'aspirateur.

L'utilisation d'un réseau de neurones classificateur présente donc de sérieux avantages. Néanmoins l'élaboration du réseau de neurones comporte une phase d'apprentissage qui tient compte de mesures des variations de pression par le capteur de sol. Ces mesures ne peuvent être retenues pour l'apprentissage que si elles sont effectuées à puissance du moteur constante. Car une variation de la puissance du moteur résulte aussi en une variation de pression qui interfère avec les variations de pression relatives purement au sol. Le bloc de contrôle de la puissance du moteur doit donc être désactivé lorsque le détecteur de sol est en phase d'analyse. Et cependant, il est très important que la phase d'analyse ait lieu le plus souvent possible de manière à ce qu'il n'y ait pas de risque que l'utilisateur passe d'un sol nettoyé à un autre sans que ce changement soit détecté.

Selon l'invention ces problèmes sont résolus, au moyen d'un aspirateur en outre caractérisé en ce que le système de commande séquentielle est une machine à ETATS FINIS qui comprend au moins les ETATS de :

ETAT 4/ REGLAGE de la puissance électrique du moteur pendant un temps T4, dans lequel une consigne pour l'amplitude moyenne de la pression du premier capteur de pression 14, ayant été préalablement imposée, ainsi que éventuellement une consigne pour le moteur de brosse :

- les moyens de réglage sont ACTIVES,
- les moyens de classification sont DESACTIVE,

ETAT 5/ ATTENTE que l'ETAT précédent ait fini de produire ses effets, pendant un temps T5, prenant en compte les constantes de temps des éléments :
ETAT 6/ ANALYSE, pendant un temps T6 susceptible d'englober au moins 1 changement de direction de la buse sur le sol pendant le nettoyage pendant lequel :

- les moyens de réglage sont DESACTIVES,
- les moyens de prétraitement sont ACTIVES,
- le réseau de neurones est ACTIVE,
- les moyens de consigne sont ACTIVES pour déterminer :

    - soit un nouveau point de consigne pour l'amplitude moyenne de la pression du premier capteur de pression, et éventuellement une consigne pour le moteur de brosse,
    - soit que les points de consigne seront inchangés,
    - puis RETOUR A L'ETAT 4/ puis à l'ETAT 5/ dans lesquels le système ne reste pas si les points de consigne ont été inchangés.

L'invention est décrite ci-après en détail en référence avec les figures annexées parmi lesquelles, schématiquement :

- la FIG.1A représente la partie interne d'un corps d'aspirateur muni de ses éléments principaux et de 2 capteurs de pression ;
- la FIG.1B représente extérieurement un aspirateur muni d'un tuyau et d'une buse ;
- la FIG.2 représente, en blocs fonctionnels, l'aspirateur et les moyens de traitement des signaux des capteurs de pression, pour le contrôle du moteur principal de ventilateur et d'un moteur auxiliaire de brosse dans la buse ;
- la FIG.3A représente les signaux des premier et second capteurs de pression à puissance constante du moteur principal, avec des taux de remplissage de la chambre à poussière différents, sur un sol "TAPIS" ;
- la FIG.3B représente les signaux des premier et second capteurs de pression, à puissance constante du moteur, à taux de remplissage du sac à poussière identique, avec trois types de sols différents ;
- la FIG.4 illustre les étapes mises en oeuvre par le système de commande séquentielle pour le contrôle du réglage du moteur principal.

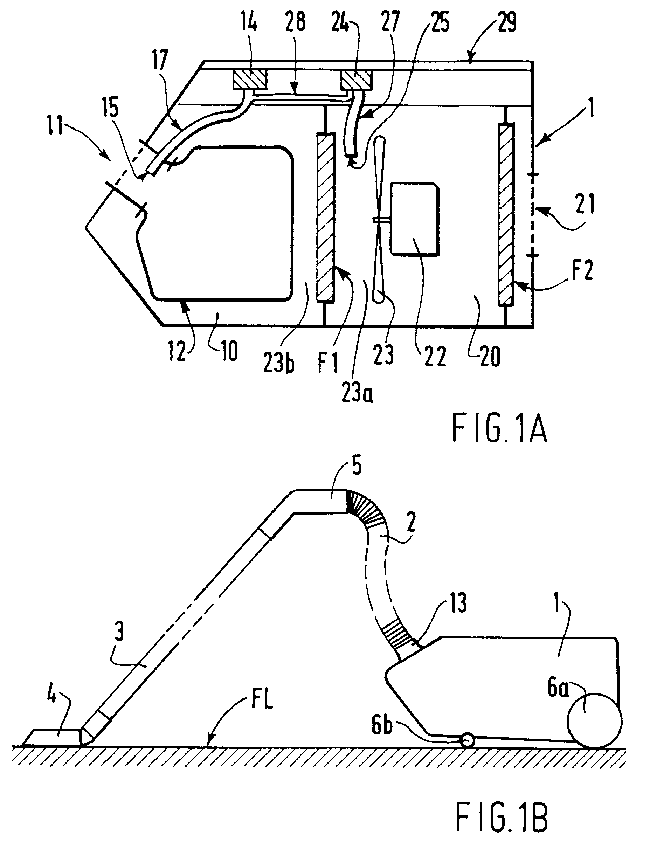

En référence avec les FIG.1A et FIG.1B, un aspirateur pour usage domestique ou industriel comprend un corps d'aspirateur 1, muni de moyens pour être aisément déplacé sur un sol à nettoyer, par exemple des roues 6A, 6B ou des patins, ou une combinaison de ces éléments.

Le corps d'aspirateur est muni d'une entrée d'air 11 et d'une sortie d'air 21, et comprend essentiellement deux logements :

- un premier logement 10 constituant la chambre à poussière, communiquant avec l'entrée d'air 11 ;
- un second logement 20 pour un ventilateur 23 entraîné par un moteur 22. Le logement 20 du ventilateur et du moteur communiquent avec la chambre à poussière 10 d'une part, et la sortie d'air 21 d'autre part. Le ventilateur 23 présente un côté succion 23a vers la chambre à poussière 10, et un côté soufflerie vers la sortie d'air 21.

Le logement 20 du ventilateur est rendu étanche à la poussière de la chambre à poussière par un filtre F1 disposé de façon amovible dans l'ouverture de communication de la chambre à poussière 10 avec ce logement 20. La sortie d'air 21 est également protégée de la poussière par un filtre F2 disposé de façon amovible entre le côté soufflerie du ventilateur et cette sortie d'air 21.

L'entrée d'air 11 est munie d'un tourniquet 13 pour permettre la rotation du tuyau 2 par rapport au corps 1 d'aspirateur. En général un sac à poussière 12 formant filtre, est disposé de manière amovible dans la chambre à poussière. Ce sac a une ouverture dirigée vers l'entrée d'air 11, et est mis en place de manière aussi étanche à la poussière que possible derrière le tourniquet 13. L'utilisation du tourniquet n'est pas indispensable à l'invention.

L'aspirateur comprend en outre un tuyau formé en général d'une partie souple 2 et d'un prolongateur rigide 5,3 terminé par une buse 4. L'extrémité du tuyau opposée à la buse est couplée avec l'ouverture de l'entrée d'air 11. Ces diverses parties sont représentées sur la FIG.1B.

Le fonctionnement de l'aspirateur comprend le branchement du moteur de ventilateur sur une source de tension alternative pour créer, par l'action du ventilateur, une dépression dans la buse, de manière à aspirer les poussières, miettes, petits débris et autres, qui se trouvent sur des sols à nettoyer. L'action de nettoyer comprend l'actionnement de la partie rigide du tuyau par l'utilisateur, selon un mouvement de va-et-vient de la buse sur le sol FL à nettoyer, formant des allers-retours de la buse sur le sol d'une manière pseudo-périodique, la pseudo-période d'un aller-retour étant de l'ordre de 0,5 seconde à environ 2 secondes.

Lorsque la buse est poussée vers l'avant par l'utilisateur au moyen de la partie rigide du tuyau, dans la partie "aller" de la pseudo-période, la buse se trouve plaquée sur le sol, et donc la résistance à l'air augmente, le flux dans le tuyau diminue, et il s'ensuit que la dépression dans le tuyau de l'aspirateur augmente.

Lorsque la buse est tirée vers l'arrière, au contraire, dans la partie "retour" de la période, la buse se trouve légèrement soulevée vis-à-vis du sol à nettoyer et la dépression dans le tuyau de l'aspirateur diminue.

Donc au changement de direction de la buse, c'est-à-dire entre un aller et un retour, et l'inverse, il apparaît une variation de la dépression. Cette variation est en outre pseudo-périodique, avec la pseudo-période des allers-retours de la buse. Ces variations de la dépression au niveau de la buse, que l'on peut aussi appeler oscillations de l'amplitude de la pression dans la buse et le tuyau, constituent des grandeurs qui sont mesurables.

En effet, chaque "aller" de la buse correspond dans cette variation pseudo-périodique, à un maximum de l'amplitude de la pression, et chaque "retour" de la buse correspond à un minimum de l'amplitude de la pression dans le tuyau d'aspirateur. Il est important de noter que la valeur de l'amplitude de la pression reste maximale pendant toute la durée de l'opération "aller", de même que l'amplitude de la pression reste minimale pendant toute la durée de l'opération "retour". Entre les maxima et les minima de pression, la variation de pression, qui correspond à un changement brusque de direction de la buse sur le sol, est abrupte. Ainsi la courbe représentative de l'amplitude de la pression en fonction du temps a pratiquement la forme d'un signal carré pseudo-périodique.

La différence d'amplitude de la pression entre les "allers" et les "retours", c'est-à-dire la différence entre l'amplitude ou la valeur de pression aux maxima et l'amplitude ou valeur de la pression aux minima de la variation pseudo-périodique, dépend fortement de l'état de surface ou de la nature du sol à nettoyer. Ainsi, cette différence d'amplitude des oscillations est grande si les allers-retours de la buse s'effectuent sur un tapis épais ; cette différence d'amplitude diminue lorsque la profondeur du tapis diminue ; et cette amplitude est quasiment nulle sur un sol dur et lisse.

D'autre part, l'amplitude moyenne de la pression dans la buse, c'est-à-dire la valeur moyenne de l'amplitude mesurée entre les maxima et minima d'amplitude par rapport à la pression zéro dépend également fortement de l'état de surface ou nature du sol à nettoyer. Cette amplitude moyenne est grande lorsque la buse est en présence d'un tapis épais ; elle diminue lorsque la profondeur du tapis diminue et elle est à une valeur minimale, mais non nulle, lorsque la buse est en présence d'un sol dur.

Ces variations d'amplitude de la pression peuvent être mesurées dans la buse du tuyau d'aspirateur. Mais, il est préférable, pour des questions de facilité de mise en oeuvre, de les mesurer au niveau de l'entrée d'air 11 du corps 1 de l'aspirateur.

Ces variations sont également visibles dans la partie du corps de l'aspirateur située en 23a entre la chambre à poussière et le ventilateur, ou bien en 23b en sortie de la chambre à poussière. Mais à ces endroits les oscillations sont amorties par la présence de la poussière et par celle des différents filtres (sac à poussière 12 et éventuellement filtre F1) eux-mêmes.

En conséquence, une mesure réalisée au niveau de l'entrée d'air 11 correspond plus correctement aux conditions de pression qui existent dans la buse même et fournit une indication plus probante de l'état de surface du sol.

Cette mesure des variations d'amplitude de la pression qui apparaissent à chaque changement de direction de la buse est réalisée au moyen d'un capteur de pression 14 dont le point de mesure 15 est disposé au niveau de l'entrée d'air 11, par exemple entre le tourniquet 13 et le sac à poussière 12. Ce capteur de pression peut être un capteur au silicium muni d'un tuyau souple 17 dont l'extrémité est amenée au point de mesure 15. Le corps du capteur 14 lui-même peut être fixé sur une plaquette 29 de circuit disposée dans le corps 1 de l'aspirateur, hors du trajet du flux d'air.

Il apparaît d'autre part, que les variations de pression au cours des allers-retours, pour un même sol et une même puissance du moteur, sont légèrement influencées par le remplissage de la chambre à poussière. C'est pourquoi, dans le but d'améliorer la robustesse de la détection de sol, une mesure de la différence de pression entre la sortie et l'entrée de la chambre à poussière est prévue.

A cet effet on dispose, dans le corps de l'aspirateur d'un second capteur de pression 24 du même type que le premier capteur de pression 14, muni d'un tuyau souple 27 dont l'extrémité est amenée au point de mesure 25 côté succion 23a du ventilateur. Le corps du capteur de pression 24 peut être fixé sur une plaquette de circuit disposée dans le corps de l'aspirateur en dehors du trajet du flux d'air. le corps du capteur de pression 24 peut par exemple être fixé sur la même plaquette 29 de circuit que le corps du capteur de pression 14.

De préférence, ce second capteur 24 est couplé au premier capteur 14 pour fournir une mesure de la différence de pression aux bornes de la chambre à poussière. La différence entre les pressions moyennes qui existent au point de mesure 15, à l'entrée de la chambre à poussière, et au point de mesure 25, en sortie de cette chambre peut être obtenue de façon simple. A cet effet, le capteur de pression 24 est un capteur différentiel, et un T référencé 28 est appliqué sur le tuyau souple qui prélève la pression au point de mesure 15 pour appliquer cette pression mesurée à la fois sur le capteur 14 d'entrée et sur le capteur 24 de sortie de la chambre à poussière. Ainsi le capteur 24 reçoit à la fois les pressions aux points de mesure 15 et 25.

Dans des variantes de mise en oeuvre, le point de mesure 25 peut être d'un côté, ou de l'autre du filtre à poussière F1, c'est-à-dire en fait, soit en sortie 23b de la chambre à poussière 10, dans cette chambre à poussière derrière le sac à poussière 12, ou bien dans la position 23b entre le filtre F1 et la face succion du ventilateur 23 dans le logement 20.

Il faut noter que, à la différence de l'aspirateur divulgué par la demande de brevet européen EP 0467 347, cité au titre d'état de la technique, ce capteur de pression 24 disposé en sortie de la chambre à poussière n'est pas indispensable pour le réglage de la pression de travail de l'aspirateur, réglage qui sera décrit plus loin. Ce second capteur de pression 24 est selon l'invention uniquement destiné à améliorer la robustesse de la classification de sol. Eventuellement la mesure de pression différentielle peut permettre de déduire une indication du taux de remplissage de la chambre à poussière.

Dans une mise en oeuvre, on peut chercher à détecter les conditions de pression relatives à 3 ou 4 sols différents, par exemple comme connu du document cité au titre d'état de la technique : tapis épais, tapis fin, tatami, et sol dur et lisse ; et on peut prévoir les réglages correspondants de la puissance du moteur du ventilateur.

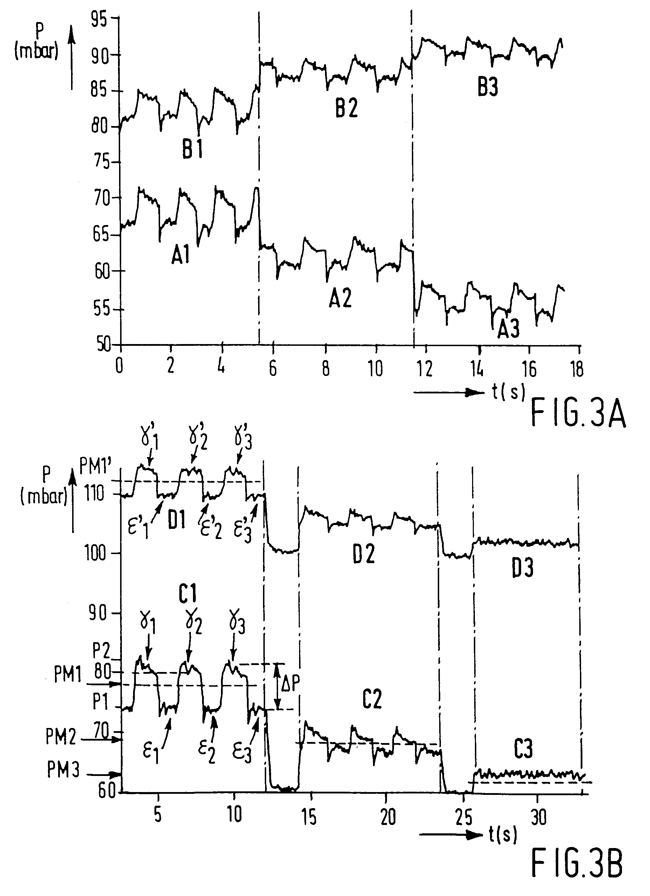

Les courbes des FIG.3A et 3B illustrent la mise en oeuvre de la détection par les deux capteurs de pression, respectivement 14 et 24.

La courbe C de la FIG.3B montre la pression P en mbar mesurée par le capteur 14 au point de mesure 15 à l'entrée du sac à poussière en fonction du temps t mesuré en secondes (s), et la courbe D de cette même FIG.3B montre la pression P en mbar mesurée par le capteur 24 au point de mesure 25 à la sortie du sac à poussière en fonction du temps t mesuré en secondes. Ces mesures sont faites à puissance constante du moteur 22 du ventilateur 23, et avec un taux de remplissage du sac à poussière identique pour toutes les parties de courbe.

On rappelle que 1 bar = $10^5$ Pa (Pascal).

Les parties C1 et D1 de courbe concernent une condition de nettoyage où la buse subit des allers-retours sur un sol muni d'un tapis épais, à brins longs, les parties C2 et D2 concernent une condition de nettoyage sur tapis de moyenne épaisseur, et les parties C3 et D3 concernent une condition de nettoyage sur sol dur.

Ces courbes montrent dans les parties C1 et D1, d'une part, et C2 et D2 d'autre part, des oscillations formées par des maxima γ1, γ2, γ3 considérés par exemple sur C1, et des minima ε1, ε2, ε3 considérés sur la même courbe C1 représentative de la pression P à l'entrée de la chambre à poussière, lorsque la buse effectue des allers et retours sur un tapis épais. Les maxima de pression, qui sont ici de l'ordre de 82 mbar correspondent aux durées de temps de l'ordre de 1,5 secondes pendant lesquelles l'utilisateur pousse la buse sur le tapis (allers). Les minima de pression, qui sont ici de l'ordre de 74 mbar correspondent aux durées de temps de l'ordre de 1,5 secondes pendant lesquelles l'utilisateur tire la buse sur le tapis (retours). La variation de la pression P entre les maxima γ1, γ2, γ3 et les minima ε1, ε2, ε3 est extrêmement abrupte : elle correspond aux changements de direction de la buse entre les allers et retours.

Les légères irrégularités qui apparaissent sur les maxima ou bien sur les minima d'amplitude sont dues au bruit et devront être lissées lors du traitement des données mesurées. Pour effectuer ce lissage, on peut par exemple effectuer une mesure de la valeur moyenne de l'amplitude dans une petite fenêtre de temps inférieure à la durée d'un maximum ou d'un minimum qui est au moins de 0,6 secondes. Favorablement, cette fenêtre peut être de 0,3 secondes.

La différence d'amplitude ΔP entre l'amplitude P2 des maxima γ1, γ2, γ3 et l'amplitude P1 des minima ε1, ε2, ε3 est dans l'exemple illustré par la FIG.3B de l'ordre de 8 mbar pour un tapis, la pression étant mesurée à l'entrée de la chambre à poussière.

On peut voir, sur la même FIG.3B que la partie D1 relative à la pression mesurée à l'arrière de la chambre à poussière dans les mêmes conditions que C1 montre également des oscillations entre les amplitudes correspondant aux allers et aux retours de la buse. Sur la courbe D1, les maxima sont notés γ'1, γ'2, γ'3... et les minima sont notés ε'1, ε'2, ε'3. L'amplitude moyenne de la pression entre maxima et minima est noté PM1'. Mais, si l'amplitude moyenne PM' de la pression (courbe D) est plus grande à l'arrière de la chambre à poussière (PM1'= environ 108 mbar pour D1) que l'amplitude moyenne PM (courbe C) à l'avant de la chambre à poussière, (PM1 = environ 79 mbar pour C1), par contre les oscillations relevées à l'arrière de la chambre à poussière (courbe D) sont plus amorties : par exemple pour un tapis, la différence d'amplitude de pression ΔP entre les allers-retours est d'environ 6 mbar (courbe D1) au lieu de 8 (courbe C1) lorsque la pression est mesurée à l'avant de la chambre à poussière. Donc il est plus favorable de placer le capteur de pression qui sert de détecteur de sol à l'avant de la chambre à poussière, plutôt qu'à l'arrière.

Les mêmes observations peuvent être faites pour les parties de courbe C2 et D2 relatives à un tapis moins épais, montrant la pression respectivement à l'avant (courbe C2) et à l'arrière (courbe D2) de la chambre à poussière.

Les parties C3 et D3 qui concernent les conditons où la buse effectue des allers-retours sur sol dur montrent que l'amplitude de la pression est ici identique pour les allers et les retours. Aucune variation d'amplitude n'apparaît : il n'y a ni maxima, ni minima. On constate seulement un léger bruit.

D'autre part, la détermination des amplitudes moyennes de pression PM1, dans la condition tapis épais (courbe C1), PM2 tapis moyen (courbe C2) et PM3, sol dur (courbe C3) montre que cette amplitude moyenne passe de 78 mbar (C1), à 69 mbar (C2) et à 64 mbar (C3). Donc cette amplitude moyenne varie avec l'état de surface du sol. Notamment, elle diminue de tapis épais, à tapis moyen et à sol dur.

La courbe A de la FIG.3A montre la pression P en mbar mesurée par le capteur 14 au point de mesure 15 à l'entrée de la chambre à poussière, en fonction des temps t mesuré en secondes, et la courbe B de cette même FIG.3A montre la pression P en mbar mesurée par le capteur 24 au point de mesure 25 à la sortie de la chambre à poussière, en fonction du temps t mesuré en secondes. Ces mesures sont faites à puissance constante du moteur 22 de ventilateur 23, et sur un tapis moyen.

Les parties A1 et B1 de courbe concernent une condition où la chambre à poussière, par exemple muni d'un sac à poussière, est vide, c'est-à-dire que le sac est propre et neuf.

Les parties A2 et B2 de courbe concernent une condition où le sac à poussière montre un taux de remplissage d'à peu près 50 %. On constate d'après ces courbes que lorsque la chambre à poussière se remplit, la pression au point 15 à l'entrée de la chambre à poussière diminue alors que la pression au point 25 à la sortie de la chambre poussière augmente.

Les parties A3 et B3 de courbe concernent la condition où le sac à poussière est plein. On constate que la pression au point 15 est minimale, alors qu'au point 25 elle est maximale.

Quelles que soient les conditions de remplissage de la chambre à poussière, les maxima et minima de pression correspondant aux allers et retours de la buse sont toujours bien mesurables sur les courbes, et tout particulièrement sur les courbes A qui correspondent à la pression mesurée à l'avant de la chambre à poussière.

Les courbes A et B de la FIG.3A montrent que l'on peut effectuer une mesure différentielle de la pression moyenne entre l'arrière de la chambre à poussière, au point de mesure 25, et l'avant de la chambre à poussière, au point de mesure 15.

Les caractéristiques mises en lumière sur la FIG.3B permettent d'arriver à une détection de sol précise. A cet effet, les mesures du premier capteur de pression 14, dit capteur de sol sont reportées sur des moyens de calcul décrit plus loin, c'est-à-dire :

- les amplitudes P2 des maxima $\gamma$1, $\gamma$2,... pour chaque type de sol,
- les amplitudes P1 des minima $\varepsilon$1, $\varepsilon$2... pour chaque

sol, pour évaluer ensuite :

- la différence d'amplitude $\Delta P = P2 - P1$

- l'amplitude moyenne : $PM = (P1 + P2)/2$

L'évaluation de la différence d'amplitude $\Delta P$ pour chaque sol permet déjà à elle seule une classification des sols. L'évaluation de l'amplitude moyenne PM permet d'améliorer cette classification. Ensuite, l'évaluation, par le traitement des mesures de la FIG.3A de la pression différentielle moyenne entre l'entrée et la sortie PM'-PM, permet une amélioration supplémentaire de cette classification.

Dans un souci de simplicité, on va décrire ci-après un exemple de mise en oeuvre où l'on cherche à détecter seulement deux états de surface ou nature du sol différents, classés "tapis" et "sol dur et lisse". Il est en effet apparu à l'expérience que cette mise en oeuvre conduit à un aspirateur simple et bon marché, dont les fonctions correspondent au mieux à la demande la plus fréquente de l'utilisateur. Cette détection de deux états possibles des sols différents conduira ensuite d'une part à des réglages de la puissance du moteur du ventilateur, et d'autre part au déclenchement automatique d'une brosse électrique placée dans la buse, éventuellement.

C'est pourquoi, dans cet exemple de mise en oeuvre, on décrit en outre des moyens pour activer le moteur d'une brosse électrique située dans la buse, dans le cas où l'appareil détecte un tapis, ou pour désactiver ce moteur, lorsque la buse vient nettoyer un sol dur et lisse.

Dans cette mise en oeuvre, on pourrait également utiliser la mesure différentielle de pression pour fournir une indication de l'état de remplissage du sac à poussière.

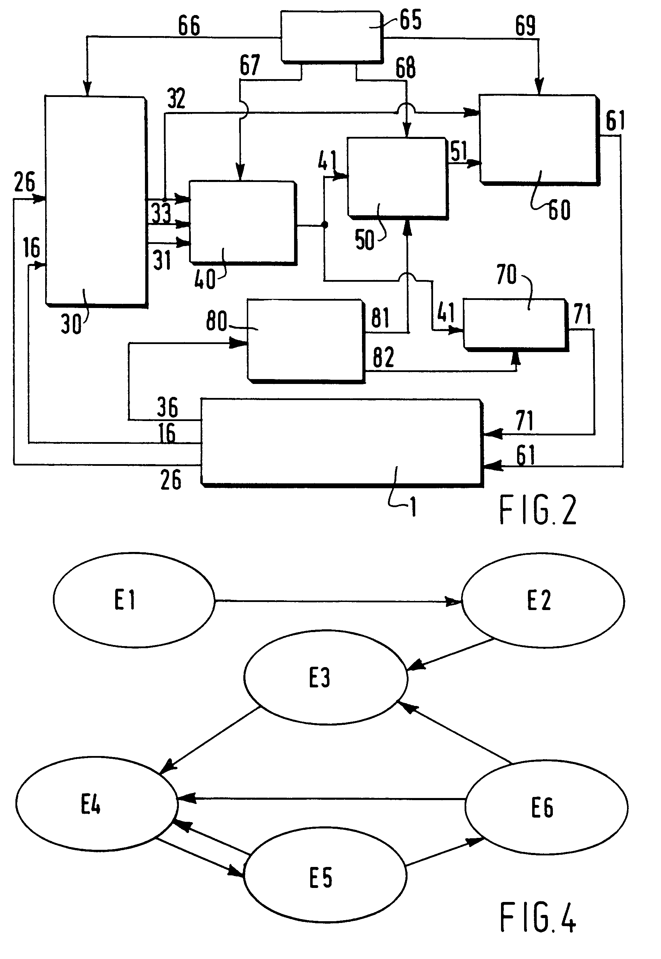

La FIG.2 représente le dispositif de détection de sol qui permet à partir des mesures 16 du capteur de pression 14 appliqué au point de mesure 15 situé à l'entrée de la chambre à poussière, et telles que représentées sur la FIG. 3B (courbe C), de fournir ultérieurement un signal de contrôle de la puissance du moteur principal 22 de ventilateur 23 et éventuellement du moteur auxiliaire de brosse (non représenté).

Ce dispositif de traitement des signaux des capteurs pour la détection de sol comprend :

- un bloc de prétraitement 30 qui reçoit en entrée les sorties 16 et 26 du premier et du second capteurs de pression et qui effectue un traitement dit PRE-TRAITEMENT consistant à calculer :
- l'amplitude moyenne de pression PM des oscillations du signal de sortie 16 du premier capteur de pression 14, relatif à la pression existant à l'entrée 11 de la chambre à poussière 12 ;
- la différence d'amplitude $\Delta P$ entre maxima et minima des oscillations du signal de sortie 16 du capteur de pression 14 relatif à cette même pression ;

- la différence des valeurs moyennes (PM'-PM) des pressions existant à l'entrée 11 au point de mesure 15 et à la sortie 23a ou 23b de la chambre à poussière, au point de mesure 25.

Ce calcul est effectué sur des durées de temps ou "fenêtres de temps" T d'une valeur suffisante, par exemple de 2 secondes, pendant lesquelles, en fonctionnement de l'aspirateur, durant une opération de nettoyage conventionnelle, un utilisateur moyen effectue au moins un changement de direction de la buse entre un aller et un retour sur le sol à nettoyer.

On rappelle que le capteur de sol 14 a un point de mesure 15 disposé dans le corps 1 de l'appareil, et que son signal de sortie 16 n'est pas lié à l'utilisation obligatoire d'une brosse électrique dans la buse.

Les opérations effectuées par ce bloc de prétraitement 30 sont donc très simples. Ce sont seulement des moyennes d'une part, et des tests d'autre part pour d'abord calculer l'amplitude moyenne PM de la pression à l'entrée du sac à poussière, pour ensuite calculer la différence des pressions moyennes (PM' - PM) entre la sortie et l'entrée du sac à poussière, et pour également détecter les maxima $\gamma1$, $\gamma2$, $\gamma3$ et minima $\epsilon1$, $\epsilon2$, $\epsilon3$ de pression coïncidant avec les allers et retours de la base et calculer les différences d'amplitudes $\Delta P$ entre ces maxima et minima.

D'autre part le bloc de prétraitement 30 effectue un léger lissage des mesures de manière à éliminer le bruit, comme il a été dit plus haut.

Ces calculs ne comportent donc ni multiplication, ni division, d'où il résulte que le bloc de prétraitement 30 effectuant ces opérations peut être très simple.

Les sorties 31, 32, 33 du bloc de prétraitement 30 sont appliquées sur un bloc 40 de réseau de neurones, dit classificateur qui comporte :

- 1 à 3 entrées,
- 2 sorties pour les signaux à calculer.

Les trois entrées du bloc 40 de réseau de neurones classificateur sont constituées par les trois signaux de sortie calculés par le bloc de prétraitement 30 :

- un signal 31 de la valeur maximale de la différence d'amplitude $\Delta P$ entre les maxima et minima des oscillations de pression, du signal fourni par le capteur de sol 14. A cet effet, pour éliminer l'effet du bruit sur les valeurs maximales et minimales, une étape de lissage du signal par exemple en calculant la moyenne sur des fenêtres de 0.3 secondes, peut être prévue ;
- un signal 32 de la valeur de l'amplitude moyenne de pression PM fournie par le capteur de sol 14,
- un signal 33 de la différence des amplitudes moyennes de pression (PM' - PM) entre la sortie et l'entrée de la chambre à poussière. Eventuellement, les coefficients du réseau de neurones relatifs à cette entrée sont faibles.

Le bloc 40 de réseau de neurones classificateur comporte seulement deux sorties complémentaires :

- tapis,
- sol dur et lisse.

Dans ce cas, tous les exemples de tapis sont contre-exemples de sol dur, et VICE VERSA. Par ailleurs, il peut être prévu de contrôler en plus du moteur principal 22 de ventilateur, un moteur auxiliaire de brosse (non représenté).

Le bloc 40 de réseau de neurones fournit donc à la sortie 41 deux signaux possibles qui correspondent à deux classes complémentaires, indiquant l'état "tapis" et l'état "sol dur".

Par exemple, les sorties peuvent être :

- Pour la première sortie : le niveau de sortie est +1, si l'état "TAPIS" est détecté, et est -1 dans le cas contraire.
- Pour la seconde sortie : le niveau de sortie est +1 si l'état "SOL DUR" est détecté, et est -1 dans le cas contraire.

Ainsi, la somme des niveaux de sortie des première et seconde sorties est nulle. Les niveaux de sortie du bloc 40 de réseau de neurones classificateur peuvent être portés sur un étage de conversion qui fournit une sortie binaire 41, telle que par exemple le niveau de ce signal 41 est +1 pour l'état TAPIS détecté, et est ø pour l'état SOL DUR détecté.

Dans une mise en oeuvre préférentielle, le réseau de neurones, dans le cas où l'on cherche à détecter seulement l'état TAPIS et l'état SOL DUR, comporte :

- 3 entrées,
- une couche cachée comprenant 0 à 7 neurones, ce nombre dépendant de la complexité des problèmes à traiter ;
- 2 sorties pour les signaux calculés qui peuvent être transformées en une seule sortie 41, comme il a été dit précédemment.

La complexité des problèmes à traiter dépend de la forme des signaux montrant les oscillations de pression (FIG.3B). Si les signaux sont bien carrés, les problèmes sont moins complexes que si les signaux sont partiellement triangulaires, ou très bruités. Or la régularité des signaux dépend en grande partie de la structure de la brosse. Donc, si la brosse donne des signaux de mauvaise qualité, le réseau de neurones aura une couche cachée plus importante.

La sortie 41 du bloc 40 de réseau de neurones classificateur est portée sur un bloc de consigne 50 qui, par une conversion directe en fonction du sol, donne une consigne 51 de l'amplitude moyenne de pression PM que l'on doit imposer à l'entrée de la chambre à poussière, pour un nettoyage adéquat du sol détecté.

Cette consigne 51 est établie par des règles simples, par exemple :

- si l'état "tapis" a été détecté, alors la consigne est 80 mbar,
- si l'état "sol dur" a été détecté, alors la consigne est 60 mbar.

Par ailleurs, le bloc de consigne 50 peut être un bloc de consigne flou. Ainsi, par exemple il peut arriver que le réseau ne fournisse pas de sortie nette telle que par exemple :

+1 correspondant à l'état "TAPIS" détecté,
-1 correspondant à l'état "SOL DUR" détecté,

c'est-à-dire que le réseau fournit une valeur intermédiaire sur chacune des sorties, par exemple + 0,5 pour l'une et -0,5 pour l'autre (la somme étant nulle). Alors la sortie 41 est aussi une valeur intermédiaire entre 0 et 1. Dans ce cas, le bloc de consigne 50, si c'est un bloc de consigne floue, applique les deux règles citées plus haut en tenant compte de la valeur de sortie 41 du réseau de neurones, et pondère la détermination de la valeur de consigne pour fournir une valeur interpolée entre les deux valeurs nettes de consigne correspondant aux valeurs nettes de sortie du réseau de neurones. Par exemple la valeur de consigne est alors une valeur d'interpolation comprise entre 60 et 80 mB.

Ainsi le bloc de consigne floue interprète les sorties du réseau de neurones de façon floue.

Le fait d'appliquer une consigne d'amplitude de pression à l'entrée de la chambre à poussière permet d'être assuré que chaque sol à nettoyer est aspiré sous la pression la plus adéquate, puisque les courbes des FIG.3A et 3B montrent que la détection ailleurs qu'à l'entrée de la chambre à poussière est légèrement altérée.

De plus, selon l'invention, ce réglage ne nécessite réellement qu'un seul capteur, qui est le capteur de pression d'entrée 14, dans l'exemple décrit, qui permet à la fois la détection de sol et l'application de la consigne de pression. Comme on a vu précédemment, l'aspirateur connu de l'état de la technique rendait indispensable deux capteurs différents pour réaliser ces deux fonctions. Selon l'invention, les deux fonctions peuvent être réalisées de façon économique par un seul capteur de pression. Cependant, le réseau de neurones peut apprendre à tenir compte du signal 33 de la différence des pressions PM'-PM entre l'entrée et la sortie de la chambre à poussière, ce qui améliore la robustesse de la classification.

Ensuite, selon l'invention, la détection, et donc le réglage de la consigne sont faits indépendamment de la mise en service d'une brosse électrique dans la buse.

Cette consigne d'amplitude moyenne de pression 51 est reportée sur un contrôleur 60 qui compare le signal de consigne 51 avec l'amplitude moyenne PM de pression 32 existant à cet instant à l'entrée de la chambre à poussière, et qui fournit un signal 61 pour régler la puissance électrique du moteur principal de telle manière que la consigne de pression appropriée est amenée ou est maintenue à l'entrée de la chambre à poussière.

D'autre part, la sortie 41 du réseau de neurone classificateur 40 peut être portée sur un second bloc de consigne 70, qui par une conversion directe en fonction du sol, donne une consigne 71 de puissance du moteur d'une brosse électrique située dans la buse 4.

Cette consigne 71 est établie par des règles simples telles que :

- si l'état tapis est détecté, alors la consigne est : moteur auxiliaire actionné,
- si l'état sol dur est-détecté, alors la consigne est : moteur auxiliaire coupé.

Un bloc de consigne floue 70 peut également être utilisé pour fournir au moteur de la brosse une puissance intermédiaire entre tout et rien.

Dans une autre mise en oeuvre de l'invention les blocs de consigne 50, 70 peuvent être regroupés en un seul bloc de consigne compact ayant deux entrées seulement :

- 1 entrée relative à la pression,
- 1 entrée relative aux sols.

Cette variante n'est pas représentée.
En outre, ce bloc de consigne compact peut être un bloc de consigne floue.

En référence avec la FIG.2, l'aspirateur muni des moyens décrits plus haut est en outre muni d'un système de commande séquentielle 65. Ce système 65 constitue une machine à ETATS FINIS fonctionnant selon le schéma logique de la FIG.4.

Ce système de commande séquentielle 65 active les moyens de prétraitement 30, de classification 40, de consigne 50 et de contrôle 60, dans un ordre approprié, sur des fenêtres de temps T, ou durées appropriées, et ceci automatiquement.

## Construction de la base d'apprentissage du réseau de neurones

Pour le fonctionnement de l'aspirateur selon l'invention la fabrication de réseau de neurones 40 passe donc par la réalisation préalable d'une base d'apprentissage dont la construction est décrite ci-après.

Selon l'invention, pour construire le réseau de neurones, on construit donc d'abord une base d'apprentissage appropriée à reconnaître le sol quelle que soit la puissance du moteur principal et quel que soit le taux de remplissage de la chambre à poussière, ainsi qu'une base de test ; puis on détermine les coefficients synaptiques du réseau de neurones.

La construction de la base d'apprentissage inclut les étapes suivantes :

1°/ Le moteur principal 22 du ventilateur 23 est réglé à une première puissance électrique constante. Des enregistrements des données fournies par le premier capteur de pression 14 et par le second capteur de pression 24 sont effectués en utilisation réelle avec des allers-retours de la buse :

1a/ pour différents sols,
1b/ pour différents taux de remplissage de la chambre à poussière,

2°/ Le moteur principal 22 du ventilateur 23 est réglé à une seconde, puis à différentes autres puissances électriques qui sont constantes, durant la répétition des enregistrements des données fournies par le premier et le second capteurs

2a/ pour les mêmes différents sols que précédemment,
2b/ pour les mêmes différents taux le remplissage de la chambre à poussière que précédemment.

A cet effet, on dispose d'échantillons des différents sols, et de plusieurs sacs à poussière 12 diversement remplis de poussière, que l'on peut mettre en place à volonté dans la chambre à poussière 10. En ce qui concerne les échantillons de sols, on effectue des mesures sur un certain nombre de sols, parmi lesquels des tapis profonds, un peu plus ras, un peu plus durs, jusqu'à des sols durs et lisses.

Les conditions de ces mesures pour la construction de la base d'apprentissage sont illustrées ar les FIG.3A et 3B déjà décrites.

Ces mesures constituent une base importante. Des tests sont ensuite réalisés en utilisant le réseau de neurones doté de coefficients appropriés, pour détecter ses capacités à la reconnaissance de sol dans des situations semblables à celles de l'apprentissage. De cette manière le réseau de neurones sera ultérieurement capable de reconnaître le sol présenté devant la buse :

- quelle que soit la puissance électrique du moteur principal,
- quel que soit le taux de remplissage de la chambre à poussière.

A l'aide du réseau de neurones réalisé dans ces conditions, et au moyen du système de commande séquentielle, l'aspirateur selon l'invention peut effectuer la reconnaissance des sols et le réglage automatique de la puissance électrique du moteur, comme il est décrit ci-après.

### Opération de reconnaissance du sol

Conformément à ce qui a été dit concernant l'opération d'apprentissage par le réseau de neurones, la reconnaissance d'un sol doit se faire maintenant à puissance de moteur principal constante.

Donc, dans l'opération de reconnaissance de sol, le contrôleur 60 du moteur principal doit être DESACTIVE.

En effet, l'opération de reconnaissance de sol est fondée sur la détection d'oscillations, qui en l'occurrence sont dans le cas présent des oscillations d'amplitude de pression à l'entrée du sac à poussière qui suivent les allers-retours de la buse poussée et tirée par l'utilisateur dans l'opération de nettoyage.

Il est évident que si un signal montrant une oscillation est introduit à l'entrée du réseau de neurones, et si cette oscillation est due à une variation de puissance électrique du moteur principal, parce que cette puissance électrique a été modifiée par le contrôleur 60, le réseau de neurones 40, dont l'apprentissage a été effectuée à puissance électrique constante, va interpréter cette oscillation comme celle d'un signal correspondant à l'état "TAPIS", alors que justement, peut-être, la buse n'est pas en contact avec un TAPIS.

Le système de commande séquentielle 65 va permettre de résoudre ces problèmes.

Les différents ETAT (abrégés E1, E2, E2 etc... sur la FIG.4) de cette machine à ETATS FINIS sont :

ETAT 1/ L'initialisation, E1, étape dans laquelle on remet les variables de pression et de temps etc, à zéro.
ETAT 2/ Dans cet ETAT :

- le contrôleur flou 60 est ACTIVE pour amener l'amplitude de la pression au point 15 à une certaine consigne de départ, de manière à être en mesure de reconnaître le sol ;
- le réseau de neurones 40 est DESACTIVE.

ETAT 3/ A ce stade, le sol est inconnu :

- le contrôleur flou 60 est alors DESACTIVE : c'est-à-dire que l'amplitude moyenne de pression reste à ce qu'elle vaut, au niveau où elle a été amenée dans l'ETAT précédent 2/ ;
- le bloc de prétraitement 30 est ACTIVE pour enregistrer les données sur une durée ou "fenêtre" T3 = 2 secondes. La durée T3 de 2 secondes est prévue pour englober au moins un changement de direction de la buse entre un aller-retour sur le sol à détecter, lors de l'opération de nettoyage par un utilisateur moyen ;
- puis le réseau de neurones 40 est ACTIVE et lancé dans l'opération d'analyse.

Dans le cadre de la présente mise en oeuvre de l'invention, où l'on est parti de l'hypothèse que l'on cherche A détecter seulement deux états "TAPIS" ou "SOL DUR", le réseau de neurones 40 fournit toujours une indication puisque les deux sorties possibles sont complémentaires.

Donc à la fin de cet ETAT, un SOL est DETECTE, et le système passe à l'ETAT suivant :

ETAT 4/ CONTROLE : A ce stade là, une nouvelle consigne 51 d'amplitude moyenne de pression correspondant au sol détecté dans l'ETAT 3/ est disponible en sortie du bloc de consigne 50, à l'entrée du contrôleur 60. Donc :

- le contrôleur 60 est ACTIVE ;
- et en même temps le réseau de neurones 40 est DESACTIVE.

Eventuellement, dans le cas où une brosse électrique est prévue une consigne 71 est disponible en sortie du bloc de consigne 70 de moteur de brosse pour activer ou désactiver cette brosse électrique.

Afin que le système ne reste pas en position de contrôle pendant un temps trop long, le temps de contrôle dans l'état 4, T4 est limité, par exemple à 3 secondes.

Dans le cadre de déroulement normal des opérations, la bonne valeur pour l'amplitude moyenne de pression à l'entrée de la chambre à poussière en 15 est atteinte en 2 à 3 secondes.

En 61 (FIG.2) le contrôleur fournit un signal qui donne la différence de puissance $\Delta$ à fournir au moteur pour obtenir la réduction de l'erreur $\delta$ de pression PM à l'entrée 15 de la chambre à poussière. Chaque valeur de pression 32 est mémorisée par le contrôleur 60 et des différences de puissance $\Delta$ sont appliquées petit à petit jusqu'à ce que l'erreur de pression $\delta$ soit suffisamment minimisée. C'est pourquoi le contrôleur reçoit la pression 32 en entrée.

Le contrôleur agit sur la puissance du moteur, ce qui fait que la pression à l'entrée de la chambre à poussière est ajustée quelle que soit la tension secteur.

Si, lorsque l'on passe à l'ETAT 4, la valeur précédente de l'amplitude moyenne de pression à l'entrée de la chambre à poussière est déjà égale à la valeur de la consigne déterminée en début d'ETAT 4), ou présente une erreur $\delta$ limitée à quelques mbar, alors le système passe immédiatement à l'ETAT suivant.

En fait on ne cherche pas à obtenir l'erreur $\delta$ complètement nulle pour plusieurs raisons. La première est que le temps d'attente serait trop long. La seconde est que l'on risquerait de lisser les oscillations. On considère donc approprié de conserver à ce stade une erreur de $\pm$ 2 mbar sur sol DUR et $\pm$ 6 mbar sur TAPIS, ce qui correspond sur TAPIS à environ la moitié de l'amplitude d'une oscillation.

ETAT 5/ Cet ETAT est un état d'ATTENTE, pendant lequel à la fois :

- le contrôleur 60 de puissance de moteur est DESACTIVE,
- le réseau de neurones 40 est DESACTIVE.

Dans cet ETAT, le système attend que la dernière action sur le moteur 22 ait fini de produire ses effets, pour recommencer à analyser les signaux produits par les capteurs 14 et 24, c'est-à-dire analyser les éventuelles variations sur la pression à l'entrée de la chambre à poussière correspondant à un éventuel changement de sol.

En effet, il peut arriver que, au moment où l'on sort de l'ETAT 4, la puissance électrique du moteur vienne juste d'être modifiée par le contrôleur 60. Alors, il faut prendre en compte le fait que tout le système présente des constantes de temps. Pour le moteur seul, cette constante de temps est de l'ordre de 0,3 secondes et le temps de stabilisation est de l'ordre de 1 seconde. Donc le temps d'attente est de l'ordre de 0,8 à 1,5 S. selon le taux de remplissage du sac à poussière. Pendant cette durée de temps, on peut voir par exemple la dépression à l'entrée de la chambre à poussière changer lentement dû à la variation imposée à la puissance électrique du moteur.

Donc si la puissance électrique du moteur vient d'être modifiée, l'ETAT 5 impose un temps d'ATTENTE.

Par contre, si dans l'ETAT 4, la puissance électrique du moteur n'a pas été modifiée par le contrôleur 60, ou si la puissance du moteur est stable durant une phase T (durée de temps) supérieure ou égale à un temps donné, par exemple 0,9 seconde, le système sort de l'ATTENTE. Donc l'ETAT 5 d'ATTENTE dure le temps donné de la phase, par exemple ces 0,9 seconde au maximum, comptés à partir du dernier changement de puissance électrique imposé au moteur.

ETAT 6/ ANALYSE : Cet ETAT est comparable à l'ETAT 3/ :

- le contrôleur 60 est DESACTIVE ;
- les mesures sont effectuées par les capteurs sur une "fenêtre" T6 de 2 sec. durant laquelle, il y a tout lieu de penser qu'il se produira, dû à l'action de l'utilisateur pendant le nettoyage, des oscillations dues uniquement aux changements de direction de la buse durant un aller-retour sur le sol à nettoyer. Après ces 2 secondes d'ANALYSE, le bloc de prétraitement 30 fournit les trois valeurs 31, 32 et 33 ;
- le réseau de neurones 40 est ACTIVE.

La sortie du réseau de neurones 40 est portée sur le bloc de consigne 50.

Deux cas peuvent se présenter en sortie du bloc de consigne 50 :

- ou bien la consigne reste inchangée : le processus peut alors s'accélérer car le système tourne entre les ETATS 4/, 5/, 6/.

En effet, il faut considérer que si l'utilisateur reste plusieurs minutes sur le même sol, ce qui est le cas le plus fréquent, il n'apparaît pas de changement de consigne pour l'amplitude moyenne de pression pendant toute la durée du nettoyage de ce même sol. Donc le système n'a pas lieu d'imposer de modification au contrôleur 60. Par conséquent le système ne reste pas dans l'ETAT 4/, ni dans l'ETAT 5/ et repasse donc directement dans l'ETAT 6/.

En d'autres termes, tant que l'on ne change pas de sol, le système reste en ANALYSE (ETAT 6) et le cycle dure au plus le temps T6 de l'ANALYSE, c'est-à-dire 2 secondes :

- ou bien la consigne doit être changée avant que le système ne retourne à l'ETAT 4/.

D'une manière générale, en ce qui concerne les temps utilisés pour la reconnaissance des sols, le système demande alors au plus :

Dans l'ETAT 4/ : 3 secondes.
Dans l'ETAT 5/ : 0,9 secondes.
Dans l'ETAT 6/ : 2 secondes.

Ce qui fait 5 à 6 secondes en tout, dans l'hypothèse d'un CONTROLE ou REGLAGE de la puissance, cela signifie que le système a la possibilité de reconnaître les sols toutes les 5 à 6 secondes dans la mise en oeuvre qui est décrite ici. C'est le cycle le plus long.

Dès que l'utilisateur change de sol, le système calcule la nouvelle pression de consigne 51, et règle par le contrôleur 60 la puissance du moteur pour atteindre cette pression de consigne. Dès que cette pression est atteinte, le contrôleur 60 n'est plus sollicité pour changer la puissance du moteur 22 et le système peut rester en ANALYSE.

Chaque fois que le réseau de neurones calcule un changement de sol, son signal de sortie 41 est amené non seulement sur le bloc de consigne 50, mais aussi sur le bloc de consigne du moteur de brosse 70, dont la sortie 71 fournit une nouvelle consigne pour le moteur de brosse.

Un avantage du système est que dès que l'utilisateur arrête son mouvement de va et vient en oubliant d'éteindre le moteur principal, le système se met systématiquement en position "SOL DUR" avec toutes ses conséquences (pression à l'entrée de la chambre à poussière : faible, éventuellement moteur de brosse arrêté).

Un autre avantage du système est que, si l'utilisateur abandonne l'aspirateur pour un moment avec la buse en l'air, le système se met pour un court moment dans la position "TAPIS". Mais cette position ne dure pas, car le système détecte immédiatement l'absence de mouvement et se met ensuite dans la position économique de SOL DUR.

Selon la structure de la brosse utilisée, on peut aussi décider que la pression de consigne pour l'état "TAPIS" sera plus faible que la pression de consigne pour l'état "SOL DUR".

Mise en oeuvre des structures de prétraitement, classification, consigne, contrôle et séquencement.

Le bloc de prétraitement 30, le réseau de neurone 40, le bloc de consigne 50, le bloc de contrôle 60 et le bloc de séquencement 65 sont intégrés dans un microprocesseur. Le bloc de séquencement commande l'ACTIVATION ou la DESACTIVATION des blocs précédents par les connexions 66 (commande du prétraitement 30), 67 (commande du réseau de neurones 40), 68 (commande du changement de consigne 50) et 69 (commande du contrôleur 60). Ce microprocesseur comprend également le bloc de consigne 70 quand il existe.

En référence avec la figure 2, le dispositif selon l'invention peut en outre comprendre un bloc 80 relié à l'aspirateur 1 par la connexion 36 qui, par une commande manuelle 81, permet de changer le niveau de la consigne 51 relative à TAPIS ou SOL DUR, et par une commande manuelle 82 permet de changer le niveau d'activation ou désactivation de la brosse. Ces variations appliquées aux blocs de consigne 50 et/ou 70 respectivement, ne sont prises en compte que dans les ETATS 4 et 5 (E4 et E5 de la figure 4) et non pas dans l'ETAT 6 (E6) de manière à ne pas perturber l'ANALYSE.

Il faut bien noter que selon l'invention de préférence, le capteur de pression constituant le capteur du sol est situé à l'entrée de la chambre à poussière. Ainsi la perturbation constituée par la chambre à poussière, le sac à poussière qui constitue un filtre et le filtre F1, est annulée. Une fois que la pression de consigne 51 est déterminée, le système a pour fonction d'arriver à appliquer cette pression de consigne à cette même entrée sur la chambre à poussière. Mais ce résultat sera obtenu selon le remplissage du sac, selon les caractéristiques du moteur, selon la tension secteur etc, en demandant des puissances différentes au moteur. Ainsi grâce au CONTROLE, pour une pression donnée à l'entrée de la chambre à poussière correspondant à un sol donné, la puissance du moteur peut avoir différentes valeurs. L'efficacité du nettoyage est donc très bonne puisqu'on est assuré d'obtenir la pression de travail appropriée quelles que soient les autres conditions (remplissage du sac, moteur, secteur).

Par ailleurs, l'homme du métier sait bien que dans le fonctionnement de tout aspirateur, il existe deux situations difficiles.

SITUATION DIFFICILE N° 1.

Il s'agit de la situation où la buse attrappe une feuille de papier ou un morceau de tissu et se bouche. Donc le flux devient minimal. Dans ces conditions, dans l'aspirateur connu de l'état de la technique, le moteur viendrait à puissance maximale. Un moteur qui vient à travailler à puissance maximale est un inconvénient. D'abord, il est bruyant. Ensuite lorsque le tuyau est bouché, le moteur n'est plus refroidi. Donc il chauffe. Selon l'invention cet inconvénient est automatiquement évité. En effet, puisque le flux diminue, la pression d'entrée augmente et devient donc supérieure à la pression de consigne la plus grande, par exemple celle qui correspond à TAPIS. Dans ces conditions, l'erreur de pression δ augmentant, le système passe en CONTROLE pour diminuer la puissance moteur progressivement comme il a été expliqué plus haut de manière à ce que la pression d'entrée revienne à sa consigne maximale permise. Comme de plus, au bout d'un cycle E4 /E5 /E6 du système selon l'invention, ce système ne va pas avoir détecté d'aller-retour, la puissance du moteur diminuera encore de manière à ce que la pression à l'entrée corresponde à celle d'un état SOL DUR c'est-à-dire une pression faible. Ce laps de temps correspondra au temps mis par l'utilisateur pour s'apercevoir qu'un objet papier ou autre obstrue la buse. L'objet sera d'autant mieux décollé.

SITUATION DIFFICILE N° 2.

Il s'agit de la situation où l'utilisateur laisse la buse sans contact avec le sol, ce qui arrive presque toujours lorsque l'utilisateur abandonne l'aspirateur pendant quelques minutes sans manipuler l'interrupteur. Donc lorsque la buse est en l'air, le flux augmente dans le tuyau et la pression d'air à l'entrée de la chambre à poussière diminue pour passer en dessous de la pression de consigne la plus basse. Le contrôleur 60 aurait donc tendance à provoquer une augmentation de la puissance du moteur dans le but de rehausser cette pression à l'entrée. Dans ce cas, le moteur risque de se voir imposer sa puissance maximale, ce qui comme dit précédemment est un inconvénient.

C'est pourquoi selon l'invention, pour limiter le flux dans l'aspirateur de manière à ce que ce flux ne dépasse jamais une valeur déterminée, on a prévu des moyens de limitation du flux qui agissent sur la pression au point de mesure 25 c'est-à-dire à l'avant et à proximité du moteur pour faire en sorte que cette pression ne descende pas en dessous d'un certain seuil.

Ces moyens comprennent des moyens de calcul de la pression au point 25 à partir de la pression mesurée par le capteur 14 et de la pression différentielle mesurée par le capteur 24 et des moyens de contrôle de la puissance du moteur en fonction de valeurs de pression limites préenregistrées pour le point de mesure 25. Grâce à ces moyens, la puissance du moteur est diminuée indépendamment de l'action du contrôleur 60, pour que la pression au point de mesure 25 reste dans les limites tabulées, ce qui limite le flux dans le tuyau d'aspirateur quelles que soient les circonstances. Une fonction d'hystérésis est également prévue pour éviter les oscillations A proximité de la valeur limite du flux.

Ainsi les deux situations difficiles trouvent leur solution. L'utilisation de moyens de limitation de flux seuls, sans les autres moyens de l'invention ne permettent pas de s'affranchir des inconvénients dûs au bouchage du tuyau d'aspirateur. C'est pourquoi l'association de tous les moyens conduit à la solution de tous les cas difficiles.

SITUATION DIFFICILE N° 3.

Selon l'invention, l'information la plus importante qui est utilisée pour prendre la décision TAPIS ou SOL DUR est celle de l'oscillation de pression montrée sur la courbe de la figure 3B. Chaque fois qu'une grande oscillation se produit par exemple juste à l'instant où la buse passe d'un TAPIS à un SOL DUR, ou tout autre mouvement brusque de l'utilisateur, alors le système aura tendance à détecter un état TAPIS, alors que justement on est sur SOL DUR, et il faudra attendre un cycle ultérieur avec une nouvelle ANALYSE pour que le système détecte enfin SOL DUR. A ce moment là seulement, la décision de baisser la pression à l'entrée, et de désactiver la brosse sera prise. Pour éviter ce problème qui consiste à passer par un premier état TAPIS avec la brosse enclenchée, et avec une forte pression d'entrée, avant de trouver les conditions de fonctionnement les plus appropriées pour SOL DUR, qui sont justement inverses avec la brosse désactivée et une pression d'entrée faible, le bloc de prétraitement 30 est muni de moyens pour sélectionner le sens de la différence de pression $\Delta P$ à partir de laquelle il fournit le signal au réseau de neurones. Ainsi lorsque, pour le calcul de la différence d'amplitude de pression $\Delta P$, un maximum $\gamma$ est détecté <u>avant</u> un minimum $\epsilon$, le bloc de prétraitement rejette ce maximum et attend le changement de direction ultérieur pour effectuer le calcul de $\Delta P$. Donc ce calcul est toujours affecté entre un minimum $\epsilon$ <u>suivi</u> d'un maximum $\gamma$. Ainsi quand par exemple la buse est levée, le système ne détecte plus un état intermédiaire TAPIS non voulu, mais attend un peu plus longtemps pour avoir la variation de pression appropriée. Cette solution élimine le problème qui apparaîtrait si, le système ayant détecté l'état TAPIS alors que la buse est levée, la brosse restait alors enclenchée, ce qui serait dangereux.

Une situation difficile du même genre, mais inverse peut apparaître lorsque l'utilisateur pose brutalement la buse sur le sol. Alors l'état TAPIS est détecté quel que soit le sol pendant le premier cycle d'analyse.

Le système selon l'invention n'a pas prévu de prendre en compte cet état de fait, pour la raison qu'il n'y a pas alors de danger à avoir la brosse enclenchée et ensuite pour la raison que cet état durera au plus quelques secondes. Dès le cycle suivant le système prendra automatiquement la décision appropriée, c'est-à-dire soit restera dans l'état TAPIS, soit passera dans l'état SOL DUR.

**Revendications**

1.  Aspirateur comprenant un corps d'aspirateur muni d'une entrée d'air (11) et d'une sortie d'air (21), et un tuyau muni d'une buse couplé à l'entrée d'air du corps d'aspirateur, ce corps d'aspirateur incluant une chambre A poussière (10) communiquant avec l'entrée d'air (11), et un logement (20) pour un ventilateur (23) entraîné par un moteur électrique (22), dit moteur principal, ce logement (20) communiquant avec la chambre A poussière (10) et la sortie d'air (21), cet aspirateur comprenant en outre :

- des moyens de détection de caractéristiques de la nature du sol nettoyé, et de prétraitement (30) de ces caractéristiques,
- des moyens de classification (40) des sols nettoyés, en fonction des caractéristiques détectées,
- des moyens de consigne (50) pour déterminer une consigne de pression d'aspiration en fonction du sol classifié,
- des moyens de réglage (60) de la puissance du moteur principal pour maintenir cette consigne de pression, cet aspirateur étant caractérisé en ce que :
- les moyens de détection ne comprennent qu'un seul capteur de pression (14) dont le point de mesure (15) est appliqué à l'entrée (11) de la chambre à poussière et qui fournit un signal présentant des variations caractéristiques de la nature du sol nettoyé,
- les moyens de classification (40) comprennent un réseau de neurones pour la reconnaissance et le classement des sols nettoyés.

cet aspirateur comprenant également :

- un système de commande séquentielle (65), pour activer dans un ordre approprié et automatiquement les moyens de prétraitement (30), de classification (40), de consigne (50), et de réglage (60) du moteur pincipal, pendant des durées de temps appropriées.

2. Aspirateur selon la revendication 1, caractérisé en ce que le signal du premier capteur de pression présentant d'une part des oscillations pseudo-périodiques, dont les maxima ($\gamma$) et les minima ($\varepsilon$) correspondent pour les uns aux allers, et pour les autres aux retours de la buse sur le sol durant l'opération de nettoyage, avec une différence d'amplitude ($\Delta$P), entre ces maxima et minima, qui varie selon la classe du sol nettoyé, et en ce que ce signal présentant en outre une amplitude dite moyenne (PM), entre les amplitudes des maxima ($\gamma$) et des minima ($\varepsilon$), qui varie selon la classe du sol nettoyé, le réseau de neurones (40) détermine la classe du sol nettoyé conjointement en fonction de la différence d'amplitude ($\Delta$P) entre maxima et minima et de ladite amplitude moyenne (PM) du signal du capteur de sol.

3. Aspirateur selon l'une des revendications 1 à 2, caractérisé en ce qu'il comprend un second capteur de pression (25), pour fournir un signal fonction de la différence des pressions moyennes d'air mesurées entre l'entrée (PM) et la sortie (PM') de la chambre à poussière (12), et en ce que le réseau de neurones (40) détermine la classe du sol nettoyé conjointement en fonction des caractéristiques du signal du premier capteur de pression (14) ($\Delta$P, PM) et en fonction de la différence des amplitudes moyennes du second et du premier capteur de pression (PM'-PM).

4. Aspirateur selon l'une des revendications 2 ou 3, caractérisé en ce que les moyens dits de prétraitement (30) reçoivent en entrée le signal (16) fourni par le premier capteur de pression (14), dit capteur de sol, et fournissent au réseau de neurones (40) , résultant de ce prétraitement :

- un premier signal (32) fonction de ladite valeur moyenne (PM) de la pression mesurée sur le trajet du flux d'aspiration par le premier capteur de pression ;
- un second signal (31) fonction de la valeur de différence d'amplitude ($\Delta$P) entre maxima ($\gamma$) et minima ($\varepsilon$) des oscillations de la pression mesurée sur le trajet du flux d'aspiration par le premier capteur de pression (14), et en ce que éventuellement les moyens de prétraitement (30) reçoivent le signal (26) fourni par le second capteur de pression (24) et fournissent au réseau de neurones classificateur (40) ;
- un troisième signal (33) fonction de la valeur moyenne (PM'-PM) de la différence entre les pressions à l'entrée et à la sortie de la chambre à poussière.

5. Aspirateur selon la revendication 4, caractérisé en ce que les moyens de prétraitement calculent le second signal (31) fonction de la valeur des différences d'amplitude $\Delta$P en prenant en compte le premier minimum $\varepsilon$ qui se présente et le maximum $\gamma$ qui suit ce premier minimum, et en laissant de côté éventuellement un maximum qui se présenterait antérieurement à ce premier minimum.

6. Aspirateur selon l'une des revendications 4 ou 5, caractérisé en ce que les moyens de consigne (50) déterminent, en fonction de la classe du sol calculée, une valeur de consigne (51) pour ladite amplitude moyenne (PM) du signal du premier capteur de pression (14), de façon à régler la pression d'aspiration de manière appropriée en fonction de la classe du sol calculée, et en ce que les moyens de contrôle (60) comparent la valeur de consigne (51) avec une mesure de la pression moyenne (32) mesurée par le premier capteur de pression, et pour déterminer une valeur de réglage (61) de la puissance électrique qui permet à l'amplitude moyenne PM du signal du premier capteur de pression d'arriver à la valeur de consigne (51).

**7.** Aspirateur selon l'une des revendications précédentes, caractérisé en ce que qu'il comprend en outre une brosse électrique disposée dans la buse et des moyens de réglage (70) de la puissance électrique du moteur de cette brosse dit moteur auxiliaire en fonction de la classe du sol calculée.

**8.** Aspirateur selon la revendication 7, caractérisé en ce que les moyens de réglage de la puissance du moteur auxiliaire comprennent un bloc de consigne (70) pour déterminer par une conversion directe en fonction de la classe de sol détecté fournie par le réseau de neurones (40), une valeur de réglage (71) de la tension d'alimentation du moteur auxiliaire pour fournir la puissance qui permet la mise en service ou hors service de la brosse disposée dans la buse selon la classe de sol détectée.

**9.** Aspirateur selon l'une des revendications 1 à 8, caractérisé en ce que le système de commande séquentielle (65) est une machine à ETATS FINIS qui comprend au moins les ETATS de :

ETAT 4/ REGLAGE de la puissance électrique du moteur pendant un temps T4, dans lequel une consigne (51) pour l'amplitude moyenne de la pression du premier capteur de pression 14, ayant été préalablement imposée, ainsi que éventuellement une consigne (71) pour le moteur de brosse :

- les moyens de réglage (60) sont ACTIVES,
- les moyens de classification (40) sont DESACTIVE,

ETAT 5/ ATTENTE que l'ETAT précédent ait fini de produire ses effets, pendant un temps T5, prenant en compte les constantes de temps des éléments ;
ETAT 6/ ANALYSE, pendant un temps T6 susceptible d'englober au moins 1 changement de direction de la buse sur le sol pendant le nettoyage pendant lequel :

- les moyens de réglage (60) sont DESACTIVES,
- les moyens de prétraitement (30) sont ACTIVES,
- le réseau de neurones (40) est ACTIVE,
- les moyens de consigne (50) sont ACTIVES

pour déterminer :

- soit un nouveau point de consigne (51) pour l'amplitude moyenne de la pression du premier capteur de pression (14), et éventuellement une consigne (71) pour le moteur de brosse,
- soit que les points de consigne (51,71) seront inchangés,
- puis RETOUR A L'ETAT 4/ puis à l'ETAT 5/ dans lesquels le système ne reste pas si les points de consigne (51,71) ont été inchangés.

**10.** Aspirateur selon l'une des revendications 1 à 9, caractérisé en en ce que le réseau de neurone classificateur (40) fournit en sortie deux classes correspondant à la détection de deux états de surface différents du sol à nettoyer qui sont un état "TAPIS" et un état "SOL DUR".

**11.** Aspirateur selon l'une des revendications 1 à 10, caractérisé en ce qu'il comprend des moyens de limitation du flux qui, en fonction de la pression moyenne détectée par l'un des capteurs de pression disposé dans l'aspirateur, limitent la puissance du moteur indépendamment de l'action des moyens de réglage (60).

## Claims

**1.** A vacuum cleaner comprising a vacuum cleaner body provided with an air inlet (11) and an air outlet (21), and a hose provided with a nozzle and coupled to the air inlet of the vacuum cleaner body, which body comprises a dust chamber (10) in communication with the air inlet (11) and a housing (20) for a fan (23) driven by an electric motor (22), called main motor, which housing (20) is in communication with the dust chamber (10) and the air outlet (21), this vacuum cleaner in addition comprising:

- detection means for characteristics of the floor type which is being cleaned and preprocessing means (30) for treating these characteristics,
- classification means (40) for the floor type being cleaned as a function of the detected characteristics,
- setpoint generating means (50) for determining an underpressure setpoint as a function of the floor type classification,
- control means (60) for the power of the main motor so as to maintain this underpressure setpoint,

which vacuum cleaner is characterized in that:

- the detection means comprise only one pressure detector (14) whose measuring point (15) is directed at the inlet (11) of the dust chamber and which provides a signal which shows variations characteristic of the nature of the floor being cleaned,
- the classification means (40) comprise a neuron network for recognizing and classifying the floors which are being cleaned,

while this vacuum cleaner in addition comprises:

- a sequential command system (65) for activating, in a given order and automatically, the preprocessing means (30), the classification means (40), the setpoint generating means (50), and the main-motor control means (60) during appropriate time periods.

2. A vacuum cleaner as claimed in Claim 1, characterized in that, the signal of the first pressure detector on the one hand presenting pseudo-periodical oscillations whose maxima ($\gamma$) and minima ($\varepsilon$) correspond to the forward strokes and to the return strokes, respectively, of the suction nozzle over the floor during the vacuum cleaning operation, with a difference in amplitude ($\Delta P$) between these maxima and minima which varies in dependence on the type of floor being cleaned, and this signal on the other hand having an average amplitude (PM) which lies between the amplitudes of the maxima ($\gamma$) and minima ($\varepsilon$) and which varies with the type of floor being cleaned, the neuron network (40) determines the type of floor being cleaned as a joint function of the amplitude difference ($\Delta P$) between the maxima and the minima and of said average amplitude (PM) of the signal of the floor type detector.

3. A vacuum cleaner as claimed in Claim 1 or 2, characterized in that it comprises a second pressure detector (25) for providing a signal which is a function of the difference in average air pressure measured between the inlet (PM) and the outlet (PM') of the dust chamber (12), and in that the neuron network (40) determines the type of floor being cleaned as a joint function of the characteristics of the signal of the first pressure detector (14) ($\Delta P$, PM) and of the difference in average amplitude between the first and second pressure detector (PM' - PM).

4. A vacuum cleaner as claimed in Claim 2 or 3, characterized in that the preprocessing means (30) receive at their input the signal (16) provided by the first pressure detector (14) or floor type detector and provide to the neuron network (40), as a result of said preprocessing:

- a first signal (32) which is a function of said average value (PM) of the pressure measured in the suction flow path by the first pressure detector;
- a second signal (31) which is a function of the value of the difference in amplitude ($\Delta P$) between maxima ($\gamma$) and minima ($\varepsilon$) of the

oscillations of the pressure measured in the suction flow path by the first pressure detector (14); and in that the preprocessing means (30) possibly receive, if so desired, the signal (26) provided by the second pressure detector (24) and supply to the neuron network (40):

- a third signal (33) which is a function of the average value (PM' - PM) of the difference in pressure between the inlet and the outlet of the dust chamber.

5. A vacuum cleaner as claimed in Claim 4, characterized in that the preprocessing means calculate the second signal (31) as a function of the value of the difference in amplitude ($\Delta P$) taking into account the first minimum ($\varepsilon$) which is offered and the maximum ($\gamma$) which follows this first minimum, while disregarding any maximum which was offered prior to said first minimum.

6. A vacuum cleaner as claimed in Claim 4 or 5, characterized in that the setpoint generating means (50) determine a setpoint value (51) for said average amplitude (PM) of the signal of the first pressure detector (14) as a function of the calculated floor type so as to control the suction pressure in an appropriate manner as a function of the calculated floor type, and in that the control means (60) compare the setpoint value (51) with a measure for the average pressure (32) measured by the first pressure detector and determine a control value (61) for the electric power which permits the average amplitude (PM) of the signal of the first pressure detector to reach the setpoint value (51).

7. A vacuum cleaner as claimed in any one of the preceding Claims, characterized in that it comprises in addition an electric brush arranged in the suction nozzle and control means (70) for the electric power of the motor of this brush, or auxiliary motor, as a function of the calculated floor type.

8. A vacuum cleaner as claimed in Claim 7, characterized in that the control means for the power of the auxiliary motor comprise a setpoint generating block (70) for determining a control value (71) for the supply voltage of the auxiliary motor through a direct conversion as a function of the detected floor type provided by the neuron network (40) so as to provide that power which leads to a switching-on or switching-off of the brush arranged in the suction nozzle in dependence on the detected floor type.

9. A vacuum cleaner as claimed in any one of the Claims 1 to 8, characterized in that the sequential command system (65) is a FINITE STATE unit which comprises at least the following STATES:

    STATE 4/ CONTROL of the electric power of the motor during a time T4 in which, a setpoint (51) for the average pressure amplitude of the first pressure detector 14 having been previously imposed, as well as possibly a setpoint (71) for the brush motor:

- the control means (60) are ACTIVATED,
- the classification means (40) are DE-ACTIVATED,

STATE 5/ WAIT until the preceding STATE has finished producing its effects, during a time T5, taking into account the time constants of the elements;
STATE 6/ ANALYSIS during a time T6 which embraces at least one change in direction of the nozzle on the floor during cleaning, during which:

- the control means (60) are DE-ACTIVATED;
- the preprocessing means (30) are ACTIVATED,
- the neuron network (40) is ACTIVATED,
- the setpoint generating means (50) are ACTIVATED so as to determine:
- either a new setpoint (51) for the average pressure amplitude of the first pressure detector (14), and possibly a setpoint (71) for the brush motor,
- or the setpoints (51, 71) remain unchanged,
- subsequently, RETURN TO STATE 4/, then to STATE 5/, in which the system does not remain if the setpoints (51, 71) were unchanged.

10. A vacuum cleaner as claimed in any one of the Claims 1 to 9, characterized in that the neuron classifier network (40) provides two classes at its output corresponding to the detection of two different surface states of the floor to be cleaned, which are a state "CARPET" and a state "HARD FLOOR".

11. A vacuum cleaner as claimed in any one of the Claims 1 to 10, characterized in that it comprises means for limiting the flow, which means limit the motor power independently of the action of the control means (60) as a function of the average pressure detected by one of the pressure detectors arranged in the vacuum cleaner.

**Patentansprüche**

1. Staubsauger mit einem Staubsaugergehäuse, das versehen ist mit einem Lufteingang (11) und einem Luftausgang (21) sowie einem Rohr mit einer Düse, das an den Lufteingang des Staubsaugergehäuses gekoppelt ist, wobei dieses Staubsaugergehäuse eine Staubkammer (10) enthält, die in Verbindung mit dem Lufteingang (11) steht, und einen Raum (20) für ein Gebläse (23), das von einem als Hauptmotor bezeichneten elektrischen Motor (22) angetrieben wird, wobei dieser Raum (20) in Verbindung steht mit der Staubkammer (10) und dem Luftausgang (21), und wobei dieser Staubsauger außerdem folgendes umfaßt:

- Mittel zur Detektierung von Eigenschaften der Art des gereinigten Bodens und zur Vorverarbeitung (30) dieser Eigenschaften,
- Mittel zur Klassifizierung (40) der gereinigten Böden in Abhängigkeit von den detektierten Eigenschaften,
- Einstellmittel (50) zur Bestimmung einer Saugdruckeinstellung in Abhängigkeit von dem klassifizierten Boden,
- Mittel zur Regelung (60) der Leistung des Hauptmotors, um diese Druckeinstellung beizubehalten,

dadurch gekennzeichnet, daß

- die Detektionsmittel nur einen einzigen Drucksensor (14) umfassen, dessen Meßpunkt (15) am Eingang (11) der Staubkammer angebracht wird und der ein Signal liefert, das die charakteristischen Veränderungen der Art des gereinigten Bodens anzeigt,
- die Klassifikationsmittel (40) ein neuronales Netz zur Erkennung und Klassifizierung der gereinigten Böden umfassen,

wobei der Staubsauger außerdem folgendes umfaßt:

- ein sequentielles Steuersystem (65), um in einer geeigneten Reihenfolge automatisch die Vorverarbeitungs- (30), Klassifikations- (40), Einstell- (50) und Hauptmotor-Regelmittel (60) während geeigneter Zeitspannen zu aktivieren.

2. Staubsauger nach Anspruch 1, dadurch gekennzeichnet, daß das Signal des ersten Drucksensors, das erstens pseudoperiodische Schwankungen aufweist, deren Maxima ($\gamma$) und Minima ($\varepsilon$) bei den einen den Vorbewegungen und beiden anderen den Rückbewegungen der Düse auf dem Boden während des Reinigungsvorgangs entsprechen, mit einem Amplitudenunterschied ($\Delta P$) zwischen diesen Maxima und Minima, der entsprechend der Klasse des gereinigten Bodens variiert, und daß dieses Signal außerdem eine sogenannte mittlere Amplitude (PM) zwischen den Amplituden der Maxima ($\gamma$) und Minima ($\varepsilon$) aufweist, die entsprechend der Klasse des gereinigten Bodens variiert, und das neuronale Netz (40) die Klasse des gereinigten Bodens zusammen in Abhängigkeit von dem Amplitudenunterschied (Δ) zwischen den Maxima und den Minima und der genannten mittleren Amplitude (PM) des Signals des Bodendetektors bestimmt.

3. Staubsauger nach einem der Ansprüche 1 bis 2, dadurch gekennzeichnet, daß er einen zweiten Drucksensor (25) umfaßt, um ein Signal in Abhängigkeit vom Unterschied der zwischen dem Eingang (PM) und dem Ausgang (PM') der Staubkammer gemessenen mittleren Luftdrücke liefern, und daß das neuronale Netz (40) die Klasse des gereinigten Bodens zusammen in Abhängigkeit von den Charakteristika des Signals des ersten Drucksensors (14) (ΔP, PM) und in Abhängigkeit von dem Unterschied der mittleren Amplituden des zweiten und des ersten Drucksensors (PM'-PM) bestimmt.

4. Staubsauger nach einem der Ansprüche 2 oder 3, dadurch gekennzeichnet, daß die sogenannten Vorverarbeitungsmittel (30) am Eingang das Signal (16) empfangen, das von dem ersten Bodensensor, genannt Drucksensor, (14) geliefert wird, und als Ergebnis dieser Vorverarbeitung dem neuronalen Netz (40) folgendes liefern:

- ein erstes Signal (32) in Abhängigkeit von dem genannten mittleren Wert (PM) des im Ansaugstromwegs von dem ersten Drucksensor gemessenen Drucks;
- ein zweites Signal (31) in Abhängigkeit vom Amplitudenunterschiedswert (ΔP) zwischen Maxima (γ) und Minima (ε) der Schwankungen des im Ansaugstromwegs von dem ersten Drucksensor (14) gemessenen Drucks,

und daß die Vorverarbeitungsmittel (30) eventuell das Signal (26) empfangen, das von dem zweiten Drucksensor (24) geliefert wird, und dem klassifizierenden neuronalen Netz folgendes liefern:

- ein drittes Signal (33) in Abhängigkeit vom mittleren Wert (PM'-PM) des Unterschiedes zwischen den Drücken am Eingang und am Ausgang der Staubkammer.

5. Staubsauger nach Anspruch 4, dadurch gekennzeichnet, daß die Vorverarbeitungsmittel das zweite Signal (31) in Abhängigkeit von dem Wert der Amplitudenunterschiede ΔP berechnen, indem sie das erste Minimum ε, das eintritt, und das zweite Maximum γ, das diesem ersten Minimum folgt, berücksichtigen und eventuell ein Maximum, das vor diesem ersten Minimum auftritt, unberücksichtigt lassen.

6. Staubsauger nach einem der Ansprüche 4 oder 5, dadurch gekennzeichnet, daß die Einstellmittel (50) abhängig von der Klasse des errechneten Bodens einen Einstellwert (51) für die genannte mittlere Amplitude (PM) des Signals des ersten Drucksensors (14) so bestimmen, daß der Ansaugdruck in geeigneter Weise in Abhängigkeit von der Klasse des errechneten Bodens geregelt wird, und daß die Steuermittel (60) den Einstellwert (51) mit der Messung eines mittleren Drucks (32) vergleichen, der von dem ersten Drucksensor gemessen wird, um einen Regelwert (61) für die elektrische Leistung zu bestimmen, der es der mittleren Amplitude PM des Signals des ersten Drucksensors ermöglicht, den Einstellwert (51) anzunehmen.

7. Staubsauger nach einem der vorstehenden Ansprüche, dadurch gekennzeichnet, daß er außerdem eine in der Düse angebrachte elektrische Bürste und Mittel (70) zur Regelung der elektrischen Leistung des mit zusätzlichem Motor bezeichneten Motors dieser Bürste in Abhängigkeit von der Klasse des errechneten Bodens umfaßt.

8. Staubsauger nach Anspruch 7, dadurch gekennzeichnet, daß die Mittel zur Regelung der elektrischen Leistung des zusätzlichen Motors einen Einstellblock (70) umfassen, um durch eine direkte Umsetzung in Abhängigkeit von der Klasse des detektierten Bodens, die von dem neuronalen Netz (40) geliefert wird, einen Regelwert (71) für die Versorgungsspannung des zusätzlichen Motors zu liefern, um die Leistung zu liefern, die die In- oder Außerbetriebnahme der in der Düse angebrachten Bürste je nach Klasse des detektierten Bodens ermöglicht.

9. Staubsauger nach einem der Ansprüche 1 bis 8, dadurch gekennzeichnet, daß das sequentielle Steuersystem (65) eine Maschine mit FESTEN ZUSTÄNDEN ist, die wenigstens die folgenden ZUSTÄNDE umfaßt:

ZUSTAND 4/ REGELUNG der elektrischen Leistung des Motors während einer Zeitspanne T4, in der eine Einstellung (51) für die mittlere Amplitude des Drucks des ersten Drucksensors 14, die zuvor eingestellt wurde, sowie eventuell eine Einstellung (71) für den Bürstenmotor erfolgt und:

- die Regelmittel (60) AKTIVIERT werden,
- die Klassifizierungsmittel (40) DEAKTIVIERT werden,

ZUSTAND 5/ WARTEN bis der vorherige ZUSTAND seine Operationen beendet hat, während einer Zeitspanne T5, wobei die Zeitkonstanten der Elemente berücksichtigt werden;
ZUSTAND 6/ ANALYSE während einer Zeitspanne T6, die geeignet ist, wenigstens 1 Richtungsänderung der Düse auf dem Boden bei der Reinigung zu beinhalten und während der:

- die Regelmittel (60) DEAKTIVIERT werden,
- die Vorverarbeitungsmittel (30) AKTIVIERT werden,
- das neuronale Netz (40) AKTIVIERT wird,
- die Einstellmittel (50) AKTIVIERT werden,

um:

- entweder einen neuen Einstellpunkt (51) für die mittlere Amplitude des Drucks des ersten Drucksensors (14) und eventuell eine Einstellung (71) für den Bürstenmotor zu bestimmen,
- oder die Einstellpunkte (51, 71) unverändert zu lassen,
- dann RÜCKKEHR ZUM ZUSTAND 4/ dann zum ZUSTAND 5/ in denen das System nicht bleibt, wenn die Einstellpunkte (51, 71) unverändert gelassen wurden.

10. Staubsauger nach einem der Ansprüche 1 bis 9, dadurch gekennzeichnet, daß das klassifizierende neuronale Netz (40) am Ausgang zwei Klassen liefert, die der Detektion zweier verschiedener Oberflächenzustände des zu reinigenden Bodens entsprechen, und die ein Zustand "TEPPICH" und ein Zustand "HARTER BODEN" sind.

11. Staubsauger nach einem der Ansprüche 1 bis 10, dadurch gekennzeichnet, daß er Begrenzungsmittel für den Luftstrom umfaßt, die in Abhängigkeit von dem mittleren Druck, der von einem der im Staubsauger angebrachten Drucksensoren detektiert wird, die Leistung des Motors unabhängig von der Aktion der Regelmittel (60) begrenzen.

FIG.1A

FIG.1B

FIG.2

FIG.4

FIG.3A

FIG.3B